Europäisches Patentamt

European Patent Office

Office européen des brevets

(11) Veröffentlichungsnummer: **0 472 875 A1**

# EUROPÄISCHE PATENTANMELDUNG

(21) Anmeldenummer: **91111791.9**

(51) Int. Cl.5: **F16D 3/18**

(22) Anmeldetag: **15.07.91**

(30) Priorität: **28.08.90 DE 4027177**

(43) Veröffentlichungstag der Anmeldung:
**04.03.92 Patentblatt 92/10**

(84) Benannte Vertragsstaaten:
**CH DE FR GB LI NL**

(71) Anmelder: **BHS-VOITH GETRIEBETECHNIK GmbH**
**Hans-Böckler-Strasse 7**
**W-8972 Sonthofen, Allgäu(DE)**

(72) Erfinder: **Heidrich, Günther, Dipl.-Ing. (FH)**
**Ortwang 38**
**W-8978 Burgberg(DE)**

(74) Vertreter: **Schieschke, Klaus, Dipl.-Ing. et al**
**Patentanwälte Dipl.-Ing. E. Eder Dipl.-Ing. K.**
**Schieschke Elisabethstrasse 34**
**W-8000 München 40(DE)**

(54) **Zahnkupplung.**

(57) Die Erfindung bezieht sich auf eine Zahnkupplung mit zwei verzahnten Kupplungsnaben 1, welche über eine an beiden Endabschnitten verzahnte Kupplungshülse 2 durch Paarung der Zahnkränze 3, der Kupplungsnaben 1 mit den Zahnkränzen 4 der Kupplungshülse 2 miteinander verbunden sind. Erfindungsgemäß erfolgt eine Zentrierung durch jeweils eine Zentrierhülse 6 im Bereich einer Zahnkranzpaarung. Diese Zentrierhülse zentriert mit einem mehrfach geschlitzten, im Abstand zu einem Befestigungsbereich 61 liegenden Hülsenende 60 unter Vorspannung bereits im Stillstand die jeweilige Zahnkranzpaarung.

FIG. 1a

EP 0 472 875 A1

Die Erfindung bezieht sich auf eine Zahnkupplung, mit zwei verzahnten Kupplungsnaben, welche über eine an beiden Endabschnitten verzahnte Kupplungshülse durch Paarung der Zahnkränze der Kupplungsnaben mit den Zahnkränzen der Kupplungshülse miteinander verbunden sind.

Die Tendenz zu immer größeren Leistungen und Drehzahlen in der Antriebstechnik erhöht auch die Anforderungen für die Kupplungen derartiger Anlagen. Die gehärtete Zahnkupplung ist hierbei in ganz besonderer Weise befähigt, große Drehmomente bei kleinen Kupplungsdurchmessern zu übertragen.

Derartige schnelldrehende Zahnkupplungen besitzen jedoch im Hinblick auf das Lauf- und Schwingungsverhalten gravierende Nachteile, deren Hauptursache die im Stillstand und bei Rotation vorhandenen Spiele sind. Zu diesen Spielen gehören das Flankenspiel, das Zentrierungsspiel und die Vergrößerung dieser Spiele durch die größere Aufweitung des äußeren, größeren Zahnkranzes gegenüber dem inneren, kleineren Zahnkranz.

Dieser Nachteil ist besonders groß bei sehr hohen Drehzahlen. Die dabei auftretenden Unwuchtkräfte können dann leicht Größen erreichen, die zu einer ernsten Gefahr für die Zahnkupplung und die angrenzenden Maschinen werden, so beispielsweise Verschleiß und Fressen bei Verzahnungen, Lagerschäden, Wellenbrüche.

Von entscheidender Bedeutung für ein gutes Laufverhalten schnelldrehender Zahnkupplungen ist neben einer guten, dynamischen Auswuchtung - möglichst der kompletten Kupplung - die exakte Zentrierung der Kupplungshülse in den beiden Kupplungsnaben während des gesamten, von der Kupplung zu durchfahrenden Drehzahl- und Lastbereiches.

Um letzteres zu erreichen, ist gemäß einer bekannten Zahnkupplung (DE-OS 1 283 607), von der die vorliegende Erfindung ausgeht, folgende Maßnahme bekannt: Die inneren Zahnkränze, beispielsweise an der Kupplungshülse oder der Kupplungsnabe, sind axial geschlitzt.

Durch diese Schlitzung in axialer Richtung wird erreicht, daß unter der Wirkung der Fliehkräfte die inneren Zahnkränze sich stärker aufweiten als die äußeren.

Damit wird insbesondere bei hohen Drehzahlen sowie auch im Leerlauf und bei kleinen Leistungen eine spielfreie Flankenanlage und damit eine gute Zentrierung erzeugt.

Wie die Praxis zeigt, besitzt jedoch eine derartige Zahnkupplung die folgenden durch die Schlitzung bedingten Nachteile:

- Das zu übertragende Drehmoment erzeugt in Umfangsrichtung eine spiralförmige, elastische Verformung der geschlitzten Zahnkränze und dadurch ein ungleichmäßiges Tragen der einzelnen Zähne. Die daraus resultierende Mehrbelastung einzelner Zähne führt zu einem vorzeitigen Flankenverschleiß.

- Die an den geschlitzten Zahnkränzen unter Fliehkrafteinwirkung entstehenden radialen Aufweitungskräften ergeben bei der Kräftezerlegung an den Zahnflanken stark vergrößerte Normalkräfte, welche wiederum den Reibungswiderstand gegen axiales Verschieben der inneren und äußeren Zahnkränze gegeneinander ganz bedeutend erhöhen. Diese Vergrößerung belastet nachteiligerweise die angrenzenden Maschinen, wenn beispielsweise ein durch thermische Dehnungen entstehender axialer Wellenversatz durch die Axialverschiebbarkeit der Kupplungsverzahnungen auszugleichen ist.

- Die bei ungeschlitzten, schnellaufenden Zahnkupplungen bewährte Einzelzahn-Durchlaufschmierung verliert durch die Schlitzung der inneren Zahnkränze ihre Wirksamkeit, da die Schlitze einen geschlossenen, mitrotierenden Ölring verhindern.

- Bei der vorbekannten geschlitzten Zahnkupplung ist deshalb eine andere Schmierungsart vorgeschlagen worden. Diese besitzt jedoch den Nachteil, daß durch das Spiel im Zahnfuß des äußeren Zahnkranzes bereits der größte Teil des vorhandenen Öls ohne Schmierwirkung ausfließt. Diese unwirksame Schmierungsart führt zu Verschleiß an den Zahnflanken und zu einer weiteren Beschränkung der Axialverschiebbarkeit.

- Die Anzahl der Schlitze beeinflußt die Anzahl der ausführbaren Zähne. Ungerade Zähnezahlen sind nicht möglich.

- Die vorbekannten, geschlitzten und flankenzentrierenden Zahnkupplungen besitzen ein fertigungs- und montagebedingtes Zahnspiel. Somit ist im Stillstand eine exakte Zentrierung nicht gewährleistet. Dieses unerwünschte Stillstandsspiel verhindert, auch bei dieser bekannten Zahnkupplung, ein Auswuchten der kompletten Kupplung.

Der vorliegenden Erfindung liegt damit die Aufgabe zugrunde, eine Zahnkupplung der eingangs genannten Art zu schaffen, welche im Stillstand und bei Rotation, unabhängig von der Höhe der Last, stets zentriert und weiterhin die Nachteile ähnlicher Zahnkupplungen vermeidet.

Diese Aufgabe wird erfindungsgemäß gelöst durch jeweils eine Zentrierhülse im Bereich einer Zahnkranzpaarung, welche mit einem mehrfach geschlitzten, im Abstand zu einem Befestigungsbereich liegenden Hülsenende unter Vorspannung bereits im Stillstand die jeweilige Zahnkranzpaarung zentriert.

Hierdurch ergeben sich folgende Vorteile:

- Die geschlitzten Enden der Zentrierhülse werden nicht durch das von der Kupplung zu übertragende Drehmoment belastet. Bei Rotation ist damit die elastische Aufweitung der geschlitzten Hülsenenden über den Umfang gleichmäßig, so daß eine sehr genaue Zentrierung der Kupplungshülse erreicht wird.

- Die das Drehmoment übertragenden Zähne sind, wie bei ungeschlitzten Zahnkupplungen gleichmäßig hoch belastet.

- Die bewährte Einzelzahn-Durchlaufschmierung kann auch bei der erfindungsgemäßen Ausbildung eingesetzt werden. Sie versorgt hierbei auch die Zentrierung mit Schmieröl infolge des seitlichen Ölaustrittes am Zahnfuß des inneren Zahnkranzes.

- Die im Stillstand und bei Rotation stets spielfrei laufende Zahnkupplung nach der Erfindung ermöglicht das Auswuchten der kompletten Kupplung. Dadurch erhält man eine hohe Laufpräzision. Das Auswuchten kompletter Zahnkupplungen war bisher ein ungelöstes Problem.

- Die Zentrierwirkung wird erfindungsgemäß weiter verbessert, indem durch eine Massenvergrößerung an dem geschlitzten Teil der Zentrierhülse die Fliehkraft vergrößert wird. Sollte aus Platzgründen eine Massenvergrößerung in der gewünschten Höhe nicht möglich sein, so kann durch Ausspritzen eines Schwermetalles am inneren Durchmesser der geschlitzten Hülsenpartien diese erreicht werden.

- Für den Ausgleich von Wellenversatz ist an der Zentrierstelle die Berührfläche der Zentrierhülse ballig ausgeführt. Außerdem befindet sich die Zentrierstelle unmittelbar neben den das Drehmoment übertragenden Zahnpaarungen, die bei Wellenversatzausgleich die Gelenkpunkte bilden.

- Die axiale Verschiebbarkeit der erfindungsgemäßen Zahnkupplungen wird verbessert durch eine Reduzierung der Reibung infolge Oberflächenhärtung der Verzahnungen und der Berührfläche der Zentrierhülse. Besonders geeignet ist hierbei das verzugsarme Nitrieren, mit einem kleineren Reibbeiwert als zwischen vergüteten Teilen. Eine weitere Verkleinerung des Reibbeiwertes wird an der Zentrierstelle der Hülse durch Aufspritzen von Keramik, Hartmetall oder ähnlichen Werkstoffen erreicht.

Auch eine Verbesserung der Oberflächenbeschaffenheit verkleinert die Reibung an den Zentrierstellen. Dies wird erreicht durch Schleifen des Kopfkreisdurchmessers am äußeren Zahnkranz und der Berührfläche der Zentrierhülse.

- Für die Befestigung der Zentrierhülse an der Kupplungsnabe bzw. der Kupplungshülse ist der jeweilige Bedarfsfall hauptsächlich entscheidend, und zwar welche Art, ob lösbar oder unlösbar eingesetzt wird. Die lösbare Befestigung erlaubt in einfacher Weise eine Nachrüstung und damit Verbesserung bereits vorhandener Kupplungen. Auch die Bildung eines Baukastensystems wird dadurch ermöglicht. Die unlösbare Verbindung, beispielsweise mittels Elektronenstrahlschweißung erhöht die Bauteilsicherheit, verringert die Kupplungsmasse und verbessert das Laufverhalten.

- Die erfindungsgemäße Ausführung beeinflußt nicht die Festlegung der Zähnezahl, d. h. die Anzahl der Schlitze in der Zentrierhülse ist nicht abhängig von der Anzahl der Zähne der Zahnkranzpaarungen. Ungerade Zähnezahlen bei den Zahnkranzpaaren sind daher ausführbar.

- Um Kerbwirkung am Ende der Schlitze abzubauen, besteht die Möglichkeit, daß der Schlitzauslauf in jeweils einer Bohrung erfolgt.

- Aus Platzgründen, z. B. bei innenliegenden Kupplungshülsen, kann es vorteilhaft sein, in weiterer Ausgestaltung der Erfindung die Zentrierhülse an der Kupplungshülse zu befestigen und in dem äußeren Zahnkranz der Kupplungsnaben zu zentrieren.

- Weiterhin erlaubt die innenliegende Kupplungshülse, diese unmittelbar in der Gelenkpunktebene (Mitte Zahnbreite) zu zentrieren.

Vorteilhafte Weiterbildungen ergeben sich aus den Unteransprüchen.

Die Erfindung wird nachfolgend anhand von in der Zeichnung dargestellten Ausführungsbeispielen näher beschrieben. In der Zeichnung zeigen:

Fig. 1a
einen Längsschnitt durch eine doppelgelenkige Zahnkupplung, mit lösbarer Befestigung der Zentrierhülse;

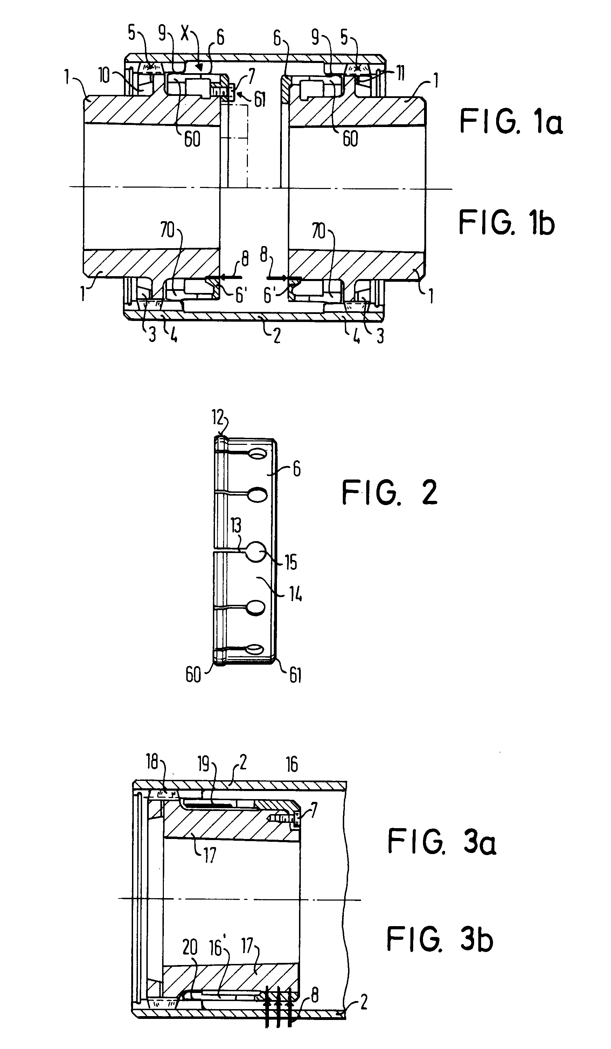

Fig. 1b
den gleichen Längsschnitt nach Fig. 1a mit unlösbarer Verbindung der Zentrierhülse an der jeweiligen Kupplungsnabe;

Fig. 2
eine Seitenansicht auf eine geschlitzte Zentrierhülse in Pfeilrichtung X nach Fig. 1;

Fig. 3a
einen Längsschnitt durch eine Zahnkupplung in einer weiteren Ausführungsmöglichkeit mit lösbarer Verbindung der Zentrierhülse;

Fig. 3b
die gleiche Ausführungsform nach Fig. 3a mit unlösbarer Befestigung der Zentrierhülse an der Kupplungsnabe;

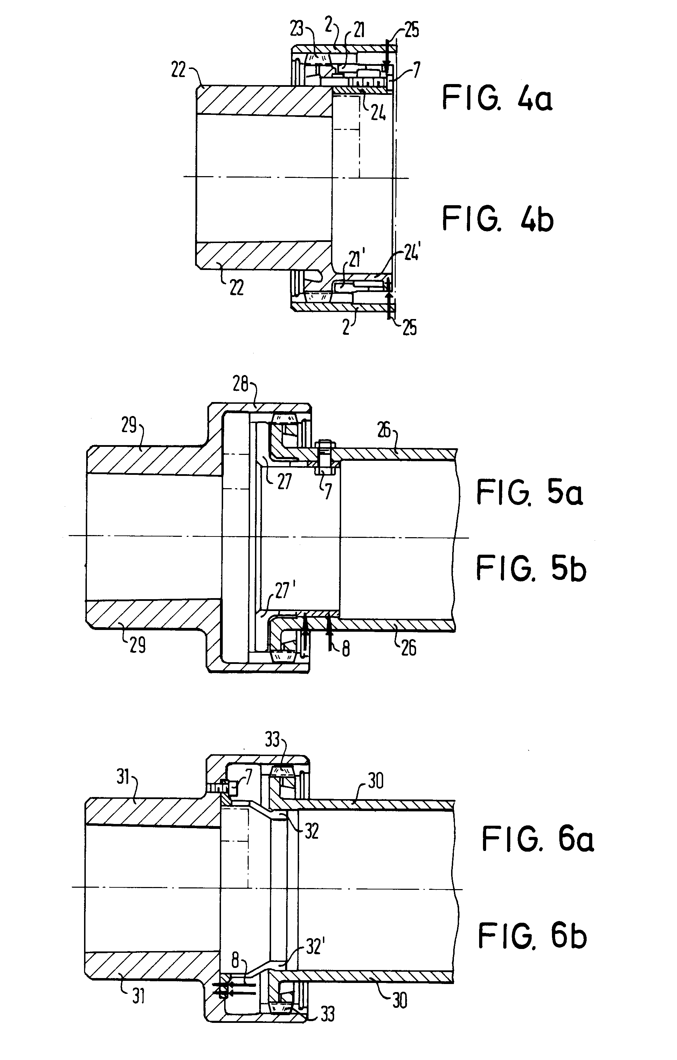

Fig. 4a eine andere Ausführungsmöglichkeit der Zahnkupplung mit durch eine lösbare Verbindung an der Kupplungsnabe zu befestigenden Ringen, an welchem die Zentrierhülse angeschweißt ist;

Fig. 4b
die gleiche Ausführungsform nach Fig. 4a mit Befestigung der Zentrierhülse durch Elektronenstrahlschweißung an einem Ring;

Fig. 5a
eine weitere Ausführungsmöglichkeit der Erfindung im Längsschnitt mit lösbarer Befestigung der Zentrierhülse an der außen verzahnten Kupplungshülse;

Fig. 5b
die gleiche Ausführungsform nach Fig. 5a mit unlösbarer Befestigung der Zentrierhülse an der Kupplungshülse;

Fig. 6a
eine weitere Ausführungsmöglichkeit der erfindungsgemäßen Zahnkupplung mit lösbarer Befestigung der Zentrierhülse an der Kupplungshülse

Fig. 6b
die gleiche Ausführungsform nach Fig. 6a mit unlösbarer Befestigung der Zentrierhülse an der Zahnkupplung.

In Fig. 1a sind zwei verzahnte Kupplungsnaben 1 im Längsschnitt halbiert dargestellt, welche mittels einer an beiden Enden verzahnten Kupplungshülse 2 drehstarr miteinander verbunden sind.

Die Übertragung des Drehmomentes erfolgt jeweils durch Paarung der inneren Zahnkränze 3 der Kupplungsnaben 1 mit den äußeren Zahnkränzen 4 der Kupplungshülse 2. Die Stellen der Drehmomentübertragung sind zugleich die Gelenkpunkte 5 für den Ausgleich von winkligem und somit auch radialem Wellenversatz. Außerdem erfolgt an diesen Stellen durch die axiale Verschiebbarkeit der Zahnkränze 3, 4 gegeneinander der Ausgleich des axialen Wellenversatzes.

Wie aus Fig. 1a ersichtlich, finden Zentrierhülsen 6 Anwendung, welche an den Kupplungsnaben 1 jeweils über einen Befestigungsbereich 61 befestigt sind. Die Zentrierhülsen 6 weisen weiterhin jeweils ein mehrfach geschlitztes Hülsenende 60 auf. Bei der Ausführungsform nach Fig. 1a sind die jeweiligen Zentrierhülsen 6 über Verschraubungen 7 stirnseitig an den Kupplungsnaben 1 befestigt.

Nach Fig. 1b besteht auch die Möglichkeit, die Zentrierhülsen 6' über Elektronenstrahlschweißung 8 stirnseitig mit den jeweiligen Kupplungsnaben 1 zu verbinden.

Die jeweiligen Hülsenenden 60 der Zentrierhülsen 6 bilden Zentrierstellen 9 für die Zentrierung der Kupplungshülse 2 auf den Kupplungsnaben 1. Diese Zentrierung erfolgt durch die stets spielfreie Abstützung der Kupplungshülse 2 an deren Kopfkreisen auf dem Zentrierbund 12 der Zentrierhülsen nach Fig. 2.

Die Schmierung der Paarungen der Zahnkränze und der Zentrierstellen wird durch Öleinspritzung in einen Ringraum 10 und durch mehrere, in den Zahnlücken der inneren Zahnkränze 3 angebrachte radiale Bohrungen 11 erreicht. Diese als Einzelzahn-Durchlaufschmierungbekannte Schmierungsart wird bei schnelldrehenden Zahnkupplungen fast ausschließlich und nach wie vor mit großem Erfolg verwendet. Durch die Erfindung ist vorteilhafterweise die Beibehaltung dieser Schmierung möglich.

Fig. 2 stellt in Pfeilrichtung X nach Fig. 1 die Zentrierhülse 6 in Einzelansicht dar. Das mit dem Zentrierbund 12 versehene Hülsenende 60 besitzt eine Anzahl in Längsrichtung verlaufender Schlitze 13, welche den geschlossenen Ringquerschnitt in Teilstücke 14 aufteilen. Der Auslauf der Schlitze 13 erfolgt zur Reduzierung der Kerbwirkung in Bohrungen 15. Der Zentrierbund 12 besitzt beispielsweise eine ballige Kontur oder eine relativ schmale Zylinderfläche mit beidseitigen Abschrägungen.

Die Anzahl der gleichmäßig am Umfang verteilten Schlitze 13 ist allgemein unabhängig von der Anzahl der Kupplungszähne, der jeweiligen Zahnkränze der Kupplungsnabe bzw. der Kupplungshülse. Um eine symmetrische Abstützung der Zahnköpfe auf den Teilstücken 14 zu erreichen, ist jedoch eine Abstimmung mit der Kupplungszähnezahl erforderlich.

Der Durchmesser des Zentrierbundes 12 besitzt gegenüber dem Kopfkreis des äußeren Zahnkranzes 4 der Kupplungshülse 2 nach Fig. 1a bzw. 1b ein geringes Übermaß, so daß bereits im Stillstand eine spielfreie Zentrierung der Kupplungshülse 2 gewährleistet ist. Dadurch ist es erstmalig auch möglich, derartige schnelldrehende Zahnkupplungen komplett montiert auszuwuchten, was für ein gutes Laufverhalten von entscheidender Bedeutung ist. Die radiale Elastizität (Federung) der Teilstücke 14 der Zentrierhülse 6 erlaubt die Montage dieser spielfreien Zentrierpassung.

Bei Rotation ergibt sich durch die Schlitze 13 folgende Wirkung für die Zentrierung der Kupplungshülse 2:
Bei Rotation entstehen in den umlaufenden Teilen Fliehkräfte, welche zu Ausdehnungen an den Einzelteilen der Kupplungen führen.; und zwar dehnt sich der im Durchmesser größere Zahnkranz 4 mehr aus als der innere Zahnkranz 3. Somit ergeben sich vergrößerte Betriebsspiele und daraus Exzentrizitäten, welche zu Unwuchten führen, die größer als die aus dem Drehmoment erzeugten Zentrierkräfte sein können. Bei Zahnkupplungen ohne Einsatz der erfindungsgemäßen Zentrierhülse 6 führt diese Fehlzentrierung immer wieder zu Schäden an den Kupplungen und den angrenzenden Maschinen.

Dagegen erreicht man durch die Schlitze 13 der erfindungsgemäßen Zentrierhülse 6, daß sich bei Rotation die Teilstücke 14 stärker aufweiten als die äußeren Zahnkränze 4 und somit eine exakte Zentrierung der Kupplungshülse 2 herbeigeführt wird. Die gewünschte Höhe der radialen Elastizität der Teilstücke 14 kann durch entsprechende Dimensionierung , bei Einsatz üblicher Berechnungsverfahren, erreicht werden. Eine Erhöhung der an den Teilstücken 14 entstehenden Fliehkräfte ist außerdem durch Vergrößerung des Zentrierbundquerschnittes 70 nach Fig. 1b nach innen zu möglich (Vergrößerung der Masse).

Figur 3a und Figur 3b stellen jeweils eine in radialer Richtung raumbeengte Anordnung der Zentrierhülse 16, 16' dar, hervorgerufen durch die am äußeren Ende der Kupplungsnabe 17 angebrachten und im Durchmesser minimierten Kupplungsverzahnungen 18. Nach Fig. 3a ist wiederum die Zentrierhülse 16 über eine Verschraubung 7 an der Kupplungsnabe 17 befestigt. Weiterhin zeigt die Fig. 3a eine Möglichkeit der Massenvergrößerung am geschlitzten Ende der Zentrierhülse 16 durch Anbringung eines Schwermetalles 19 am inneren Hülsendurchmesser.

Nach Fig. 3b besteht auch die Möglichkeit, den Zentrierbund der Zentrierhülse 16' mit einer Oberflächenbeschichtung 20 zu versehen, und zwar zur Reduzierung der Reibung beim Ausgleich von radialem Wellenversatz. Als Beschichtungswerkstoff kann beispielsweise aufspritzbares Hartmetall oder Keramik eingesetzt werden. Bei der Ausführungsform nach Fig. 3b ist die Zentrierhülse 16' über Elektronenstrahlschweißung 8 unlösbar mit der Kupplungsnabe 17 verbunden.

Fig. 4a und 4b zeigen die Ausbildung der Zentrierhülse 21 bzw. 21' bei am inneren Ende der Kupplungsnabe 22 angebrachten Kupplungsverzahnungen 23. Hierbei findet nach Fig. 4a ein Ring 24 Anwendung, welcher über eine Verschraubung 7 mit der Stirnseite der Kupplungsnabe 22 verbunden. Dieser Ring 24 ist über Elektronenstrahlschweißung 25 unlösbar mit der Zentrierhülse 21 verbunden, welche wiederum eine Abstützung im Bereich der Kupplungsverzahnungen 23 bewirkt.

Nach Fig. 4b ist der Ring 24' direkt über Elektronenstrahlschweißung 25 unlösbar mit der Zentrierhülse 21' verbunden.

Bei der Ausführungsform nach Fig. 5a und 5b findet eine innenliegende Kupplungshülse 26 Anwendung, deren erfindungsgemäße Zentrierung über die an der Kupplungshülse 26 lösbar oder unlösbar befestigte Zentrierhülse 27 bzw.27' erfolgt. Die spielfreie Abstützung der innenliegenden Kupplungshülse 26 erfolgt dabei über die Zentrierhülse 27 bzw.27' an den Köpfen des äußeren Zahnkranzes 28 der Kupplungsnabe 29.

Nach Fig. 5a ist hierbei die Zentrierhülse 27 über eine Verschraubung mit der Kupplungshülse 26 verbunden, wohin gegen bei der Ausführungsform nach Fig. 5b wiederum die Zentrierhülse 27' über Elektronenstrahlschweißung 8 unlösbar an der Kupplungshülse 26 befestigt ist.

Figur 6a bzw. 6b zeigen ebenfalls bei einer innenliegenden Kupplungshülse 30 deren erfindungsgemäße Zentrierung über die an der Kupplungsnabe 31 lösbar oder unlösbar befestigte Zentrierhülse 32 bzw. 32'. Dabei erfolgt die spielfreie Abstützung der Kupplungshülse 30 unmittelbar in einer Ebene durch die Gelenkpunkte 33 in Mitte Zahnbreite und senkrecht zur Rotationsachse.

Bei der Ausführungsform nach Fig. 6a ist die Zentrierhülse 32 an den stirnseitigen Bereich der Kupplungsnabe 33 über Verschraubungen 7 befestigt; bei der Ausführungsform nach Fig. 6b erfolgt eine unlösbare Verbindung der Zentrierhülse 32' mit der Kupplungsnabe 31 über Elektronenstrahlschweißung 8.

Für alle Bauarten ist es vorteilhaft, wenn die Verzahnungen und der Zentrierbund oberflächengehärtet sind, wenn Kopfkreisdurchmesser des äußeren Zahnkranzes und Außendurchmesser des Zentrierbundes geschliffen sind und wenn das Schleifende des Außendurchmessers des Zentriersbundes der Zentrierhülse nach der Befestigung der betreffenden Zentrierhülse und der Oberflächenhärtung erfolgt.

Bei allen Auführungsformen nach Fig. 3a bis Fig. 6b wird wiederum analog der Ausführungsform nach Fig. 1a die Schmierung der Zahnpaarungen und Zentrierstellen durch Öleinspritzung in den betreffenden Ringraum und durch mehrere, in den Zahnlücken der Zahnkränze angebrachte radiale Bohrungen erreicht. Es ergibt sich damit die vorerwähnte Einzelzahn-Durchlaufschmierung.

## Patentansprüche

1.   Zahnkupplung, mit zwei verzahnten Kupplungsnaben, welche über eine an beiden Endabschnitten verzahnte Kupplungshülse durch Paarung der Zahnkränze der Kupplungsnaben mit den Zahnkränzen der Kupplungshülse miteinander verbunden sind, gekennzeichnet durch jeweils eine Zentrierhülse (6, 6'; 16, 16'; 21, 21' 27, 27'; 32, 32') im Bereich einer Zahnkranzpaarung, welche mit einem mehrfach geschlitzten, im Abstand zu einem Befestigungsbereich (61) liegenden Hülsenende (60) unter Vorspannung bereits im Stillstand die jeweilige Zahnkranzpaarung zentriert.

2.   Zahnkupplung nach Anspruch 1, dadurch gekennzeichnet, daß die Zentrierhülse (6, 6', 16, 16', 21, 21', 32, 32') über den Befestigungsbereich (61) an der jeweiligen Kupplungsnabe (1, 17, 22, 31) angeordnet ist.

3. Zahnkupplung nach Anspruch 1, dadurch gekennzeichnet, daß die Zentrierhülse (27, 27') über den Befestigungsbereich an dem jeweiligen Endabschnitt der Kupplungshülse (26) angeordnet ist.

4. Zahnkupplung nach Anspruch 2 oder 3, gekennzeichnet durch lösbare oder unlösbare Anordnung des Befestigungsbereiches.

5. Zahnkupplung nach einem der vorhergehenden Ansprüche, dadurch gekennzeichnet, daß das Hülsenende (60) der Zentrierhülse den Kopfkreis des Zahnkranzes der jeweiligen Kupplungsnabe (1, 17, 22, 31) neben den drehmomentübertragenden Zahnkranzpaarungen zentriert.

6. Zahnkupplung nach einem der Ansprüche 1 bis 4, dadurch gekennzeichnet, daß das Hülsenende (60) der Zentrierhülse (27, 27') den Kopfkreis des jeweiligen Zahnkranzes der Kupplungshülse (26) neben den drehmomentübertragenden Zahnkranzpaarungen zentriert.

7. Zahnkupplung nach einem der vorhergehenden Ansprüche, dadurch gekennzeichnet, daß die Zentrierhülse (6, 6', 16, 16', 21, 21', 27, 27', 32, 32') eine Anzahl in Längsrichtung verlaufende Schlitze (13) aufweist, welche jeweils in einer Bohrung (15) auslaufen und den geschlossenen Ringquerschnitt der Zentrierhülse in Teilstücke (14) aufteilen.

8. Zahnkupplung nach einem der vorhergehenden Ansprüche, dadurch gekennzeichnet, daß die Zentrierhülse (6) im Bereich des Hülsenendes einen gegen den zu zentrierenden Bereich gerichteten Zentrierbund (12) aufweist., welcher gegenüber dem Kopfkreis des äußeren Zahnkranzes (4) ein geringes Übermaß besitzt.

9. Zahnkupplung nach Anspruch 8, dadurch gekennzeichnet, daß der Zentrierbund (12) eine ballige Kontur oder eine zylinderische Kontur mit Abschrägungen aufweist.

10. Zahnkupplung nach einem der vorhergehenden Ansprüche,gekennzeichtnet durch eine Einlage (19) am inneren Hülsendurchmesser der Zentrierhülse (16) im Bereich des Hülsenendes (Fig. 3a).

11. Zahnkupplung nach einem der vorhergehenden Ansprüche, gekennzeichnet durch eine Oberflächenbeschichtung (20) am Zentrierbund (12) der Zentrierhülse (16') (Fig. 3b).

12. Zahnkupplung nach einem der vorhergehenden Ansprüche, dadurch gekennzeichnet, daß die Zentrierhülse (21, 21') über einen Ring (24, 24') lösbar oder unlösbar mit der jeweiligen Kupplungshülse (22) verbunden ist (Fig.4).

13. Zahnkupplung nach einem der vorhergehenden Ansprüche, mit einer innenliegenden Kupplungshülse, dadurch gekennzeichnet, daß die Zentrierhülse (27, 27') lösbar oder unlösbar mit der Kupplungshülse (26) verbunden ist (Fig. 5a, Fig. 5b).

14. Zahnkupplung nach einem der Ansprüche 1 bis 12, mit einer innenliegenden Kupplungshülse, dadurch gekennzeichnet, daß die Zentrierhülse (32, 32') lösbar oder unlösbar mit der jeweiligen Kupplungsnabe (31) verbunden ist und mit ihrem geschlitzten Hülsenende die Kupplungshülse (30) unterhalb der Zahnkranzpaarung in Mitte Zahnbreite und senkrecht zur Rotationsachse zentriert (Fig.6a, Fig. 6b).

15. Zahnkupplung nach einem der vorhergehenden Ansprüche, dadurch gekennzeichnet, daß die lösbare Verbindung der Zentrierhülse (6, 16, 21, 27, 32) mit der Kupplungshülse (26) oder der jeweiligen Kupplungsnabe (1, 17, 22, 31) als Schraubverbindung (7) ausgebildet ist.

16. Zahnkupplung nach einem der Ansprüche 1 bis 14, dadurch gekennzeichnet, daß die unlösbare Verbindung der Zentrierhülse (6, 16', 21', 27', 32') mit der Kupplungshülse (26) oder der jeweiligen Kupplungsnabe (1, 17, 22, 31) als Elektronenstrahlschweißung (8, 25) ausgebildet ist.

17. Zahnkupplung nach einem der vorhergehenden Ansprüche, dadurch gekennzeichnet, daß im Bereich der Zahnkranzpaarungen der Kupplungsnaben und der Kupplungshülse jeweils ein Ringraum (10) und mindestens eine radiale Bohrung (11) zur Einzelzahn- Durchlaufschmierung vorgesehen sind.

FIG. 1a

FIG. 1b

FIG. 2

FIG. 3a

FIG. 3b

FIG. 4a

FIG. 4b

FIG. 5a

FIG. 5b

FIG. 6a

FIG. 6b

8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-B-1 059 252   (TACKE)<br>* das ganze Dokument * * | 1-6,8,9,<br>12-15 | F 16 D 3/18 |
| Y | GB-A-1 176 435   (STOECKICHT) | 1-6,8,9,<br>12-15 | |
| A | GB-A-1 176 435   (* das ganze Dokument *) | 17 | |
| Y | CH-A-230 554   (BROWN BOVERI)<br>* das ganze Dokument * * | 1-6,8,9,<br>13-15 | |
| D,Y | DE-B-1 283 607   (STOECKICHT)<br>* das ganze Dokument * * | 1-6,8,9,<br>13-15 | |
| Y | DE-C-349 715   (FAST)<br>* das ganze Dokument * * | 1-6,8,<br>13-15 | |
| Y | US-A-1 942 782   (SMITH)<br>* das ganze Dokument * * | 1-6,8,<br>13-15 | |
| A | DE-B-1 208 125   (G.E.C.)<br>* das ganze Dokument * * | 1,2,4-6 | RECHERCHIERTE SACHGEBIETE (Int. Cl.5) |
| A | US-A-2 823 527   (BELDEN)<br>* das ganze Dokument * * | 9 | F 16 D |
| A | GB-A-882 669   (A.E.I.)<br>* das ganze Dokument * * | 11 | |
| A | DE-A-2 330 875   (BHS)<br>* das ganze Dokument * * | 17 | |

−/−

Der vorliegende Recherchenbericht wurde für alle Patentansprüche erstellt

| Recherchenort | Abschlußdatum der Recherche | Prüfer |
|---|---|---|
| Den Haag | 15 November 91 | BALDWIN D.R. |

**Europäisches Patentamt**

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-C-807 873 (STOECKICHT)<br>* das ganze Dokument * *<br>– – – | 17 | |
| A | DE-C-3 722 097 (NETZSCH-MOHNOPUMPEN)<br>– – – | | |
| A | DE-B-1 142 473 (BUCKAU R. WOLF)<br>– – – – – | | |

| | RECHERCHIERTE SACHGEBIETE (Int. Cl.5) |
|---|---|

Der vorliegende Recherchenbericht wurde für alle Patentansprüche erstellt

| Recherchenort | Abschlußdatum der Recherche | Prüfer |
|---|---|---|
| Den Haag | 15 November 91 | BALDWIN D.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument